Europäisches Patentamt

European Patent Office

Office européen des brevets

(11) Publication number: **0 344 562**
**A1**

# EUROPEAN PATENT APPLICATION

(21) Application number: 89109147.2

(22) Date of filing: 20.05.89

(51) Int. Cl.4: **A47B 77/02 , A47B 77/08 , A47L 15/00 , A47J 27/14 , F24C 15/18**

(30) Priority: 31.05.88 IT 4161388

(43) Date of publication of application:
06.12.89 Bulletin 89/49

(84) Designated Contracting States:
AT BE CH DE ES FR GB GR LI NL SE

(71) Applicant: C & D REFRIGERATION S.P.A.
Via Tagliavini 10
I-42045 Luzarra (Milano)(IT)

(72) Inventor: Ferlin, Renzo
Via Sografi 31/2
I-35100 Padova(IT)

(74) Representative: Modiano, Guido et al
MODIANO, JOSIF, PISANTY & STAUB
Modiano & Associati Via Meravigli, 16
I-20123 Milano(IT)

(54) **Workstation particularly for producing gastronomic preparations.**

(57) Described is a workstation (1) particularly but not exclusively usable for the production of complete or partial meals or of food preparations in public service facilities such as hotels, restaurants, inns, etc. The station (1) comprises a cabinet-like structure with an upper support surface and is composed of a plurality of modular elements (2, 3, 4, 5), one being empty or partially occupied by a compressor/condenser unit (6) for refrigerating. The other compartments are distinct units refrigerated at different temperatures. The workstation according to the invention has a cooking surface with multiple flame burners (8) and/or electric burner plates (9) and/or dispensers of cold liquid inserted in said surface, while a convection and/or microwave oven (7), a washer or an ice-making machine are inserted in the empty or partially occupied compartment. A sink, a pasta cooker, a fryer, a food warmer or a bain-marie can be conveniently inserted between said compartment and the corresponding region of the surface.

Fig.1

# WORKSTATION PARTICULARLY FOR PRODUCING GASTRONOMIC PREPARATIONS

The present invention relates to a workstation particularly but not exclusively usable for producing gastronomic preparations such as, for example, complete or partial meals or food preparations.

Said station is particularly conceived for public service facilities such as hotels, restaurants of any category, inns, fast-food places, full-service bars, communities of every kind, public and private hospitals, shops and commercial distribution facilities in general, in preparing gastronomic products of any kind.

It is known that in such places cabinet-like structures are utilized which are composed of a plurality of modular elements constituted by units refrigerated at different temperatures according to their use for deep-frozen food, frozen food and/or routine preservation of products such as meat, fish, cold cuts, dairy products, fruit, vegetables, etc.

Such structures extend substantially horizontally and are provided on top with a support and work surface.

Said refrigerated units require a compressor/condenser unit which is normally built into the lower portion of one of the modules or is separate from the assembly and is placed remotely therefrom.

The volume not used for the compressor/condenser unit is usually employed for drawers for storing objects etc.

The above described refrigerated cabinet-like structure with an upper support surface are not operatively tied to any of the remaining processing units in the cooking areas of restaurant service facilities.

For this reason, the operator is forced to shift position continuously while he works to reach the various units, consequently wasting time and energy.

The principal aim of the present invention is to provide a workstation particularly for producing gastronomic preparations which allows the operator a more comfortable and functional activity.

A consequent important object is to provide a workstation the use whereof allows considerable time savings in producing gastronomic preparations.

Another important object is to provide a workstation the use of which ultimately allows the possibility of qualitatively better preparations and better results in a management sense as well with respect to those currently in use.

Not the least object is to provide a workstation composed of elements which can be assembled in a modular manner according to the requests and needs of the user

This aim, as well as these and other objects which will become apparent hereinafter, are achieved by a workstation particularly for producing gastronomic preparations, comprising a cabinet-like structure with an upper support surface and is composed of a plurality of modular elements at least one of which is empty or partially occupied in its lower portion by a compressor/condenser unit for refrigerating, the others being distinct units refrigerated at different temperatures, characterized in that cooking surfaces with multiple flame burners and/or electric burner plates and/or dispensers of cold liquid are inserted in sections of said surface, a convection and/or microwave oven, a dishwasher or an ice-making machine being inserted in said empty or partially occupied element, a sink, a pasta cooker, a fryer, a food warmer or a bain-marie being insertable between said element and the corresponding region of said surface.

Further characteristics and advantages of the invention will become apparent from the detailed description of some embodiments, illustrated only by way of non-limitative example in the accompanying drawings, wherein:

figure 1 is a view of a first embodiment of a workstation according to the invention;

figure 2 is a view of a second embodiment of the workstation according to the invention;

figure 3 is a view of a third embodiment of the workstation according to the invention.

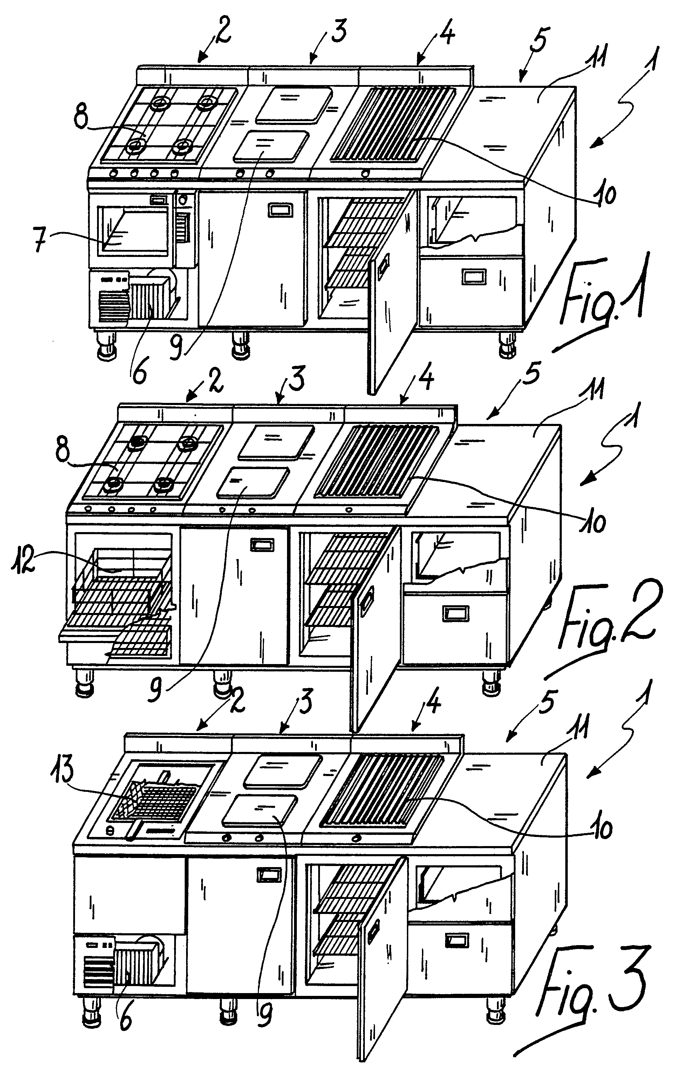

With reference to the above-cited figure 1, a workstation particularly for producing gastronomic preparations is indicated overall by the reference numeral I and comprises four modules arranged side by side, respectively indicated by 2, 3, 4 and 5, the first one of which has inside, in its lower portion, a compressor/condenser unit 6, while the others are distinct units possibly refrigerated at different temperatures.

The remaining upper portion of said module 2 is occupied by a microwave oven 7 above which a cooking surface with multiple flame burners 8 is placed.

A cooking surface with electric burner plates 9, a grill 10 and a resting surface 11 are respectively laid out above said modules 3, 4 and 5.

With reference to the above-cited figure 2 the workstation 1 may not have a compressor condenser unit and therefore a mechanized kitchen-utensil washer 12 is inserted in the module 2.

With reference now to the previously cited figure 3, in module 2 equipped with a compressor condenser unit 6, a professional oil fryer 13 is placed instead of the microwave oven and the cooking surface with multiple flame burners; dispensers of cold liquids such as beverages, water, etc. may be similarly placed.

In other embodiments of the invention not illustrated in the accompanying drawings, if the compressor/condenser unit 6 is provided in the module 2 the remaining space can be used to provide a professional forced-air convection oven for traditional cooking, au gratin cooking etc. and for restoring to desired condition the food contained in the other modules, or to provide a mechanized washer for food, such as fruit and/or vegetables, or to provide a mechanized washer for cooking utensils or again to provide a pasta cooker.

Said module 2 can furthermore be used to insert a professional sink in the upper portion, with the possible insertion below of a small neutral compartment for putting miscellaneous items, or to insert a food warmer or a professional air bain-marie.

If the compressor/condenser unit 6 is separated from the workstation 1, it is also possible to insert in the module 2 a professional ice-cube or ice-flake machine, a mechanized washer suitable for washing all kitchen-utensils with or without an additional container below the wash baskets, or a professional convection oven above combined with a microwave oven below or a mechanized washer below suitable for washing small kitchenware.

In the above case of a compressor/condenser unit separated from the module 2, it is obviously possible to provide on top a cooking surface, a burner plate, a grill or an ordinary work surface.

The extreme versatility both in terms of the arrangement of the various elements and of subsequent use makes the workstation according to the invention extremely functional and optimally answers to the specific requirements of each user.

Its use furthermore allows one to carry out a plurality of operative functions in a single compact cabinet-like structure without moving from one part of the kitchen to the other.

The aim and objects of the present invention are therefore achieved.

The invention thus conceived is susceptible to numerous modifications and variations, all of which are within the scope of the inventive concept.

All the details may furthermore be replaced with other technically equivalent elements

In practice, the materials employed, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Workstation particularly for producing gastronomic preparations, comprising a cabinet-like structure with an upper support surface and is composed of a plurality of modular elements (2, 3, 4, 5) at least one of which is empty or partially occupied in its lower portion by a compressor/condenser unit (6) for refrigerating, the others being distinct units refrigerated at different temperatures, characterized in that cooking surfaces with multiple flame burners (8) and/or electric burner plates (9) and/or dispensers of cold liquid are inserted in sections of said surface, a convection and/or microwave oven (7), a dishwasher (11) or an ice-making machine being inserted in said empty or partially occupied element (2), a sink, a pasta cooker, a fryer, a food warmer or a bain-marie being insertable between said element and the corresponding region of said surface.

2. Workstation according to claim 1, characterized in that an ice-cube or ice-flake machine or a mechanized washer (12) with or without an additional container below the wash baskets, or a convection oven arranged above a microwave oven (7) or above a washer for small kitchenware, or a mechanized food washer, or a sink, or a pasta cooker, or a fryer, or a food warmer, or finally an air bain-marie are inserted in said empty element, each of said units also occupying the corresponding portion of said support surface.

3. Workstation according to claim 1, characterized in that a forced-air convection oven, or a microwave oven (7), or a mechanized food washer, or a mechanized kitchenware washer (12) is inserted in said element partially occupied by a compressor/condenser unit (6) for refrigerating, cooking surfaces with multiple flame burners (8), or electric burner plates (9), or grills, or cold-liquid dispensers being insertable in the corresponding region of said support surface.

4. Workstation according to claim 1, characterized in that a sink with a small neutral compartment below for collecting miscellaneous utensils, or a fryer, or a food warmer, or an air bain-marie is inserted in the upper portion of said element, partially occupied in its lower portion by a compressor condenser unit (6) for refrigerating, and below the corresponding region of said upper support surface.

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 093 823 (DITTA ANGELO PO GRANDI IMPIANTI S.p.A.) <br> * Figures 1,2; claim 7 * | 1 | A 47 B 77/02 <br> A 47 B 77/08 <br> A 47 L 15/00 <br> A 47 J 27/14 <br> F 24 C 15/18 |
| Y | US-A-4 685 311 (LEITNER CORP.) <br> * Figures 1,2; abstract * | 1 | |
| A | BE-A- 647 042 (SIEMENS) <br> * Figures 1-7; pages 3-5 * | 1-4 | |
| A | US-A-2 576 409 (HOTPOINT INC.) <br> * Figure 1 * | 1-4 | |
| A | NL-A-7 404 445 (PATZNER KG) <br> * Figure; pages 1-4 * | 1-4 | |
| A | EP-A-0 252 024 (MERLONI ELETTRODOMESTICI S.p.A.) <br> * Figures 1,2; abstract * | 1-4 | |
| A | DE-A-3 413 193 (MIELE & CIE GmbH & CO.) <br> * Figure; abstract * | 1-4 | TECHNICAL FIELDS SEARCHED (Int. Cl.4) <br><br> A 47 B <br> A 47 L <br> A 47 J <br> F 24 C <br> F 25 D |

The present search report has been drawn up for all claims

| Place of search | Date of completion of the search | Examiner |
|---|---|---|
| THE HAGUE | 11-09-1989 | NOESEN R.F. |

EPO FORM 1503 03.82 (P0401)